# EUROPÄISCHE PATENTSCHRIFT

(11) **EP 0 555 747 B1**
(45) Veröffentlichungstag und Bekanntmachung des Hinweises auf die Patenterteilung: **02.05.1997**
(21) Anmeldenummer: 93101628.1
(22) Anmeldetag: 03.02.1993
(51) Int. Cl.: C08F 4/24, C08F 10/02

(54) **Phillips-Katalysator und seine Verwendung zur Herstellung von Ethylenhomopolymerisaten und -copolymerisaten**
Phillips-catalyst and its use for the production of ethylene-homopolymers and copolymers
Catalyseur de type Phillips et son utilisation pour produire des homo- et copolymères d'éthylène

(30) Priorität: 13.02.1992 DE 4204259
(43) Veröffentlichungstag der Anmeldung: 18.08.1993
(73) Patentinhaber: BASF Aktiengesellschaft, 67063 Ludwigshafen (DE)
(72) Erfinder: Evertz, Kaspar, Dr., W-6707 Schifferstadt (DE); Saive, Roland, Dr., W-6700 Ludwigshafen (DE); Funk, Guido, Dr., W-6520 Worms 1 (DE); Koelle, Peter, Dr., W-6700 Ludwigshafen (DE); Konrad, Rainer, Dr., W-6701 Goennheim (DE); Gropper, Hans, Dr., W-6703 Limburgerhof (DE)

(56) Entgegenhaltungen:
- EP-A- 0 075 421
- EP-A- 0 110 316
- DE-A- 2 240 246
- US-A- 3 509 116
- DATABASE WPIL Section Ch, Week 9301, 15. Dezember 1992 Derwent Publications Ltd., London, GB; Class A17, AN 93-008623

## Beschreibung

Die vorliegende Erfindung betrifft einen neuen Phillips-Katalysator für die Homopolymerisation von Ethylen und die Copolymerisation von Ethylen mit α-Olefinen. Der neue Phillips-Katalysator enthält als katalytisch wirksame Komponente einen auf einem feinteiligen Aluminiumsilikat-Gel geträgerten, mit einem Fluorid modifizierten und in einer oxidierenden Atmosphäre bei höheren Temperaturen aktivierten Chromkatalysator.

Geträgerte Chromkatalysatoren dieser Art sind beispielsweise aus der US-A-3 509 116 oder der DE-A-39 38 723 bekannt und dienen der Herstellung hochmolekularer Ethylenhomopolymerisate und -copolymerisate. Zwar weisen die mit Hilfe dieser Phillips-Katalysatoren hergestellten Ethylenhomopolymerisate und -copolymerisate beim Blasformprozeß ein vergleichsweise geringes Schwellen beim Austritt aus der Extruderdüse auf, indes läßt ihre Kälteschockzähigkeit stark zu wünschen übrig. Außerdem ist die Produktivität dieser bekannten Phillips-Katalysatoren unbefriedigend.

Aufgabe der vorliegenden Erfindung war es, einen neuen Phillips-Katalysator bereitzustellen, welcher die Nachteile des Standes der Technik nicht mehr länger aufweist und welcher in hoher Ausbeute Ethylenhomopolymerisate und -copolymerisate von ausgezeichneter Kälteschockzähigkeit liefert, welche beim Blasformprozeß nicht mehr zum Schwellen neigen.

Erfindungsgemäß konnte diese Aufgabe wirkungsvoll und elegant dadurch gelöst werden, daß man spezielle Aluminiumsilikat-Gele, worin das Aluminiumoxid im Oberflächenbereich der Trägergelteilchen angereichert ist, als Trägergele verwendet.

Im Hinblick auf den Stand der Technik war es nicht zu erwarten gewesen, daß mit Hilfe dieser Maßnahme die gesteckten Ziele, insbesondere die Verbesserung der Kälteschockzähigkeit von Ethylenhomopolymerisaten und -copolymerisaten, erreicht werden konnten.

Demgemäß handelt es sich bei dem Gegenstand der vorliegenden Erfindung um einen neuen Phillips-Katalysator für die Homopolymerisation von Ethylen und die Copolymerisation von Ethylen mit α-Olefinen, enthaltend als katalytisch wirksame Komponente einen auf einem feinteiligen Aluminiumsilikat-Gel geträgerten, mit mindestens einem Fluorid modifizierten und in einer oxidierenden Atmosphäre bei 400 bis 1100 °C aktivierten Chromkatalysator mit einem Chromgehalt von 0,1 bis 10 Gew.-% welcher dadurch gekennzeichnet ist, daß das Aluminiumsilikat-Gel (Trägergel) einen Aluminiumoxidgehalt von 0,5 bis 6 Gew.-% aufweist, wobei das Aluminiumoxid im Oberflächenbereich der Trägergelteilchen angereichert ist.

Im folgenden wird dieser neue Phillips-Katalysator für die Homopolymerisation von Ethylen und die Copolymerisation von Ethylen mit α-Olefinen der Kürze halber als "erfindungsgemäßer Phillips-Katalysator" bezeichnet.

Der erfindungsgemäß wesentliche Bestandteil des erfindungsgemäßen Phillips-Katalysators ist das feinteilige .Aluminiumsilikat-Gel oder Trägergel.

Erfindungsgemäß weist das Trägergel einen Aluminiumoxidgehalt von 0,5 bis 6 Gew.-% auf. Im allgemeinen empfiehlt es sich nicht, andere Aluminiumoxidgehalte zu wählen, weil hierdurch die katalytische Wirksamkeit des erfindungsgemäßen Phillips-Katalysators nachteilig beeinflußt wird. Demnach handelt es sich bei dem Bereich von 0,5 bis 6 Gew.-% um einen optimalen Bereich, innerhalb dessen der Aluminiumoxidgehalt frei gewählt und den jeweiligen technischen Anforderungen des Verfahrens angepaßt werden kann. Innerhalb dieses optimalen Bereichs ist derjenige von 1,5 bis 4 Gew.-% hervorzuheben, weil die erfindungsgemäßen Phillips-Katalysatoren, welche unter Verwendung von Aluminiumsilikat-Geien eines solchen Aluminiumgehalts hergestellt worden sind, in besonders hoher Produktivität kälteschockzähe Ethylenhomopolymerisate und -copolymerisate liefern.

Erfindungsgemäß ist das Aluminiumoxid im Oberflächenbereich der Trägerteilchen angereichert.

Hierbei ist es erfindungsgemäß von Vorteil, wenn das Aluminiumoxid an der Oberfläche der Poren der Trägergelteilchen angereichert ist.

Vorteilhafterweise liegt das Porenvolumen bei 0,8 bis 1,5 ml/g. Zwar können auch Trägergelteilchen eines größeren oder eines kleineren Porenvolumens angewandt werden, indes stellen sich dann die erfindungsgemäß zu erzielenden Vorteile nicht mehr zuverlässig ein.

Außerdem ist es erfindungsgemäß von Vorteil, wenn die Trägergelteilchen eine spezifische Oberfläche von 200 bis 700 m²/g aufweisen. Werden Trägergelteilchen von geringerer spezifischer Oberfläche verwendet, läßt die katalytische Wirksamkeit der betreffenden Phillips-Katalysatoren häufig zu wünschen übrig. Dagegen haben Phillips-Katalysatoren auf der Basis von Trägergelteilchen einer spezifischen Oberfläche von > 700 m²/g eine vergleichsweise geringe Abriebfestigkeit.

Im allgemeinen liegt die Teilchengröße der Trägergelteilchen zwischen 1 und 300, insbesondere 10 bis 150 µm.

Die erfindungsgemäß anzuwendenden Aluminiumsilikat-Gele sind übliche und bekannte, im Handel erhältliche Materialien. Ihre Herstellung und Eigenschaften werden in der DE-A-32 44 032 oder der Firmenschrift der Firma Grace GmbH, Worms, "Grace-Silica Gel", Dezember 81/0-2-05.1 Gö.D im Detail beschrieben.

Der neue Chromkatalysator weist einen Chromgehalt von 0,1 bis 10, vorteilhafterweise 0,5 bis 3 und insbesondere 0,7 bis 1,5 Gew.-% auf. Im allgemeinen empfiehlt es sich nicht, geringere oder höhere Chromgehalte anzuwenden, weil sich ansonsten die erfindungsgemäß zu erzielenden Vorteile nicht mehr in zuverlässiger Weise einstellen.

Der erfindungsgemäß zu verwendende Chromkatalysator ist mit mindestens einem Fluorid modifiziert. Hierbei kann die Menge des Fluorids breit variiert werden; erfindungsgemäß ist es indes von Vorteil, das Fluorid in einer solchen Menge anzuwenden, daß ein Fluoridgehalt im Chromkatalysator von 0,1 bis 5 Gew.-% resultiert.

Beispiele geeigneter erfindungsgemäß anzuwendender Fluoride sind Ammoniumfluorid, Ammoniumbifluorid, Ammoniumtetrafluorborat, Bortrifluorid, Ammoniumhexafluorphosphat und Ammoniumhexafluorsilikat, von denen Ammoniumhexafluorsilikat besonders vorteilhaft ist und deshalb bevorzugt angewandt wird.

Der erfindungsgemäß anzuwendende Chromkatalysator kann in unterschiedlicher Weise hergestellt werden. Indes empfiehlt es sich, die vorstehend im Detail beschriebenen erfindungsgemäß anzuwendenden feinteiligen Aluminiumsilikat-Gele nach bekannten Methoden, wie sie beispielsweise in der DE-B-25 40 278 oder der DE-A-36 40 802 beschrieben sind, mit Chromtrioxid oder einer Chromverbindung zu beladen, welche unter den Bedingungen der nachstehend im Detail beschriebenen Aktivierung in Chromtrioxid überführt werden kann. Im allgemeinen erfolgt die Beladung in einem Gewichtsverhältnis von Trägergelteilchen:Chrom von 100:0,1 bis 100:10, insbesondere 100:0,5 bis 100:3.

Vorteilhafterweise werden hierbei die Trägergelteilchen in einer Lösung von Chromtrioxid oder einer unter den Bedingungen der Aktivierung in Chromtrioxid überführbaren Verbindung suspendiert, wonach man unter möglichst homogener Durchmischung der Suspension deren flüssige Bestandteile wie z.B. Alkohole und/oder Ketone sowie gegebenenfalls noch Wasser verdampft. Vorzugsweise werden hierbei Temperaturen von 20 bis 150°C und Drücke von 10 mbar bis 1 mbar eingehalten. Hierbei erweist es sich als gewisser Vorteil, wenn das noch nicht aktivierte chromhaltige Aluminiumsilikat-Gel noch eine gewisse Restfeuchte aufweist. Allerdings sollen die flüchtigen Bestandteile nicht mehr als 20, insbesondere nicht mehr als 10 Gew.-%, bezogen auf das noch nicht aktivierte chromhaltige Trägergel, betragen.

Beispiele geeigneter Chromverbindungen sind außer Chromtrioxid und Chromhydroxid Salze des dreiwertigen Chroms mit organischen und anorganischen Säuren wie Chromacetat, -oxalat, -sulfat und -nitrat sowie Chelate des dreiwertigen Chroms wie Chromacetylacetonat. Von diesen sind die Verbindungen bevorzugt, welche bei der Aktivierung rückstandsfrei in Chromtrioxid übergehen. Hiervon werden Chrom(III)-nitrat-9-hydrat und Chromacetylacetonat ganz besonders bevorzugt verwendet.

Bereits bei der Herstellung des noch nicht aktivierten chromhaltigen Aluminiumsilikat-Gels können die vorstehend beschriebenen Fluoride aufgetragen werden. Erfindungsgemäß ist es indes von Vorteil, die Fluoride bei der Aktivierung aufzutragen.

Methodisch gesehen weist diese Aktivierung keine Besonderheiten auf, sondern kann nach den aus der DE-A-15 20 467 bekannten Methode erfolgen. Vorteilhafterweise wird hierbei das noch nicht aktivierte chromhaltige Aluminiumsilikat-Gel in einem wasserfreien, Sauerstoff in einer Konzentration von über 10 Vol.-% enthaltenden Gasstrom während 10 bis 1000 min, insbesondere 150 bis 750 min, auf 400 bis 1100, insbesondere 500 bis 800°C, erhitzt und danach auf Raumtemperatur abgekühlt, wodurch der erfindungsgemäß zu verwendende Chromkatalysator resultiert.

Der resultierende erfindungsgemäß zu verwendende Chromkatalysator kann vor seiner Verwendung auch noch durch Ethylen und/oder α-Olefine, Kohlenmonoxid oder Triethylboran reduziert oder durch Silylierung modifiziert werden.

Außer dem vorstehend beschriebenen erfindungsgemäß zu verwendenden Chromkatalysator kann der erfindungsgemäße Phillips-Katalysator auch noch metallorganische Verbindungen als Cokatalysatoren enthalten. Beispiele geeigneter Cokatalysatoren sind lithium-, bor-, zink- und aluminiumorganische Verbindungen wie sie beispielsweise in den Patentschriften US-A 4 845 176, US-A 4 398 004, US-A 4 444 966, US-A 3 403 142 und EP-A-0 137 934 beschrieben sind. Diese Cokatalysatoren können in den üblichen und bekannten Mengen vor der eigentlichen (Co)Polymerisation in Form einer Lösung oder einer Suspension zu dem erfindungsgemäß zu verwendenden Chromkatalysator hinzugegeben werden. Es ist indes von Vorteil, die Cokatalysatoren direkt in den jeweils verwendeten Polymerisationsreaktor einzudosieren.

Der erfindungsgemäße Phillips-Katalysator eignet sich hervorragend für die Herstellung von Homopolymerisaten des Ethylens und Copolymerisaten des Ethylens mit α-Olefinen nach dem Phillips-Verfahren. Hierbei kommen als Polymerisationsreaktoren die üblichen und bekannten Schleifenreaktoren, Autoklaven, Gasphasenreaktoren mit Rührer und Gasphasenwirbelschichtreaktoren in Betracht.

Beispiele für geeignete α-Olefine, welche mit Ethylen copolymerisiert werden können, sind Mono- und Diolefine mit drei bis 12 Kohlenstoffatomen im Molekül. Beispiele gut geeigneter α-Olefine dieser Art sind Prop-1-en, But-1-en, Pent-1-en, Hex-1-en und Oct-1-en sowie die konjugierten und nicht konjugierten Diolefine Butadien, Penta-1,3-dien, 2,3-Dimethylbutadien, Penta-1,4-dien, Hexa-1,5-dien und Vinylcyclohexen. Im allgemeinen werden die Comonomere dem Ethylen in einer solchen Menge zugesetzt, daß Ethylencopolymerisate aus 96 bis 99,8 Gew.-% an einpolymerisiertem Ethylen und 0,2 bis 4 Gew.-% mindestens eines einpolymerisierten Comonomeren entstehen.

Der erfindungsgemäße Phillips-Katalysator weist besondere unerwartete Vorteile auf. So ist er empfindlich gegenüber der Reglerwirkung von Wasserstoff. Er eignet sich hervorragend für die Homo- und Copolymerisation des Ethylens nach den üblichen und bekannten particle-form-Verfahren in einer Suspension aus einem gesättigten Kohlenwasserstoff und Ethylen unter einem Druck von 20 bis 50, insbesondere 40 bar, und Temperaturen von 90 bis 110°C. Hierbei liefert er mit hoher Produktivität (Co)Polymerisate von vorzüglicher Morphologie und guter Verarbeitbarkeit mit Schmelzflußindices von 0,01 bis 0,5 g/10 min, high-load Schmelzflußindices von 1,0 bis 20 g/10 min und Schmelzflußverhältnissen von 50 bis 200, welche bei der Verarbeitung nach dem Blasformprozeß beim Austritt aus der Extruderdüse nur ein sehr geringes Schwellen zeigen. Die mit Hilfe des erfindungsgemäßen Phillips-Katalysators hergestellten (Co)Polymerisate eignen sich daher besonders hervorragend für die Verarbeitung nach dem Folienblas- und Blasformverfahren.

### Beispiel und Vergleichsversuche

### Beispiel

### Die Herstellung eines erfindungsgemäßen Phillips-Katalysators und seine Verwendung zur Herstellung eines Ethylenhomopolymerisats

20 kg eines Aluminiumsilikat-Gels, welches in seinem Oberflächenbereich 3,6 Gew.-% Aluminiumoxid angereichert enthielt und das in der Tabelle angeführte Eigenschaftsprofil aufwies, wurde in einem Doppelkonustrockner bei 130°C und 30 mbar während 7 h getrocknet. Hiernach wurde der Doppelkonustrockner mit Stickstoff begast, und sein Inhalt wurde auf Raumtemperatur abgekühlt. Im Anschluß daran wurde der Doppelkonustrockner evakuiert. In den evakuierten Doppelkonustrockner wurden 50 l einer Lösung von 1,35 kg Chromacetylacetonat in 50 l Methanol eingesaugt. Nach 30 minütigem Rühren der resultierenden Suspension wurde das Suspensionsmittel unter Normaldruck bei 65°C abdestilliert, und das verbleibende noch nicht aktivierte chromhaltige Aluminiumsilikat-Gel wurde unter Stickstoffbegasung auf Raumtemperatur abgekühlt und getrocknet.

19,5 kg des getrockneten, noch nicht aktivierten chromhaltigen Aluminiumsilikat-Gels wurden zusammen mit 500 g, entsprechend 2,5 Gew.-%, Ammoniumhexafluorsilikat im wasserfreien Luftstrom bei 600°C während 10 h in einem Wirbelschichtaktivator erhitzt und danach wieder abgekühlt. Beim Abkühlen wurde das Fließbett ab 140°C von Stickstoff durchspült, um Sauerstoffspuren, welche bei der Polymerisation stören, zu beseitigen.

Der resultierende erfindungsgemäß zu verwendende Chromkatalysator hatte einen elementaranalytisch ermittelten Chromgehalt von 2 x 10⁻⁴ mol/g.

Er wurde direkt für die Polymerisation des Ethylens verwendet.

Hierfür wurde ein üblicher und bekannter Schleifenreaktor verwendet, dessen Rohrkreis einen Reaktionsraum von 6 m³ aufwies. Der Reaktionsraum war mit einer 45 gew.-%igen Suspension von Polyethylen in Isobutan gefüllt, welche durch eine Propellerpumpe mit 3000 Upm so rasch umgepumpt wurde, daß im Reaktionsraum eine turbulente Strömung herrschte. In dem Reaktor wurde eine Temperatur von 104,3°C aufrecht erhalten. Des weiteren wurde durch Regelung der Menge an ein- und ausgeschleustem Suspensionsmittel (je 720 kg/h Isobutan) die Konzentration des im Suspensionsmittel gelösten Ethylens bei 12 Vol.-% konstant gehalten.

Bei diesem kontinuierlich stationären Betrieb wurden bei der Einschleusung von 112,5 g/h Katalysator 900 kg/h Polymerisat in Grießform ausgeschleust.

Die Eigenschaften des so erhaltenen Polyethylens werden in der Tabelle den Eigenschaften des Polyethylens der Vergleichsversuche A und B gegenübergestellt. Der Vergleich zeigt, daß die Kälteschockzähigkeit des in erfindungsgemäßer Verfahrensweise erhaltenen Polyethylens diejenige der in herkömmlicher Weise hergestellten Polyethylene übertraf. Außerdem wies das in erfindungsgemäßer Weise erhaltene Polyethylen des vorliegenden Beispiels - im Gegensatz zu den Polyethylenen der Vergleichsversuche A und B - beim Blasformen nur noch ein sehr geringes, den Verfahrensablauf nicht mehr störendes Schwellen auf.

### Vergleichsversuch A

### Die Herstellung eines bekannten Phillips-Katalysators und seine Verwendung zur Herstellung eines Ethylenhomopolymerisats

Das Beispiel wurde wiederholt, nur daß anstelle des erfindungsgemäß zu verwendenden Chromkatalysators der im Handel erhältliche Chromkatalysator 967BW der Firma Grace, Worms, verwendet wurde, die Polymerisationstemperatur bei 106,2°C lag und bei Einschleusung von 300 g/h Phillips-Katalysator 900 kg/h Polyethylen ausgeschleust wurden.

Die Kenndaten und die Ergebnisse des Vergleichsversuchs A werden in der Tabelle denjenigen des Beispiels und des Vergleichsversuchs B gegenübergestellt. Die Ergebnisse untermauern, daß der bekannte Phillips-Katalysator dem erfindungsgemäßen hinsichtlich der Produktivität und das resultierende Polyethylen dem in erfindungsgemäßer Verfahrensweise erhaltenen in der Kälteschockzähigkeit eindeutig unterlegen war.

### Vergleichsversuch B

### Die Herstellung eines bekannten Phillips-Katalysators und seine Verwendung zur Herstellung eines Ethylenhomopolymerisats

Der Vergleichsversuch A wurde wiederholt, nur daß anstelle des dort verwendeten bekannten Phillips-Katalysators der Phillips-Katalysator des Beispiels 1 der DE-A-39 38 723 verwendet wurde, die Polymerisationstemperatur bei 104,5°C lag und bei der Einschleusung von 128,5 g/h Katalysator 900 kg/h Polyethylen ausgeschleust wurden.

Die Kenndaten und die Ergebnisse des Vergleichsversuchs B sind in der Tabelle denjenigen des Beispiels und des Vergleichsversuchs A gegenübergestellt. Auch sie untermauern die Nachteiligkeit des bekannten Phillips-Katalysators und des hiermit hergestellten Polyethylens.

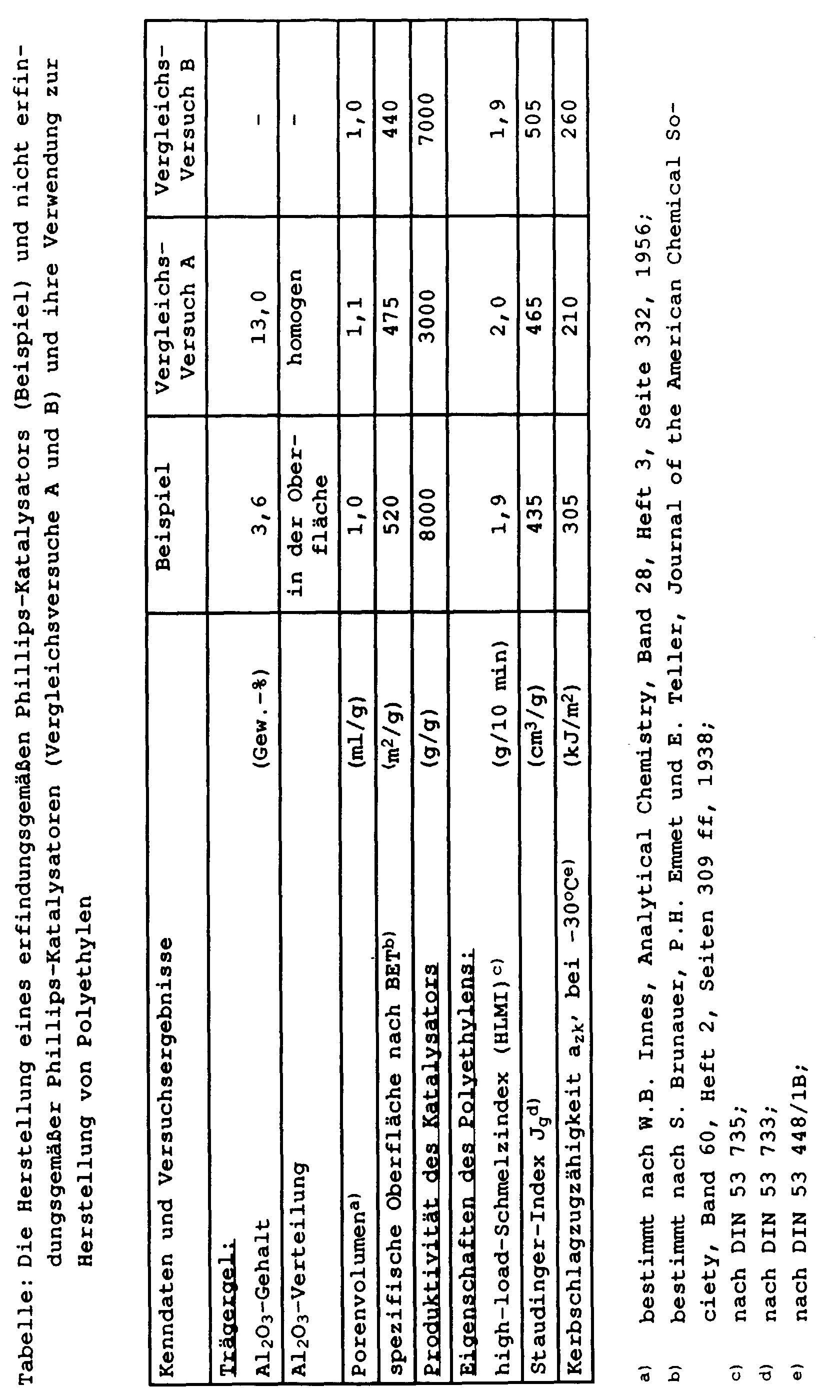

## Patentansprüche

1. Phillips-Katalysator für die Homopolymerisation von Ethylen und die Copolymerisation von Ethylen mit α-Olefinen, enthaltend als katalytisch wirksame Komponente einen auf einem feinteiligen Aluminiumsilikat-Gel geträgerten, mit mindestens einem Fluorid modifizierten und in einer oxidierenden Atmosphäre bei 400 bis 1100 °C aktivierten Chromkatalysator mit einem Chromgehalt von 0,1 bis 10 Gew.-%, dadurch gekennzeichnet, daß das Aluminiumsilikat-Gel (Trägergel) einen Aluminiumoxidgehalt von 0,5 bis 6 Gew.-% aufweist, wobei das Aluminiumoxid im Oberflächenbereich der Trägergelteilchen angereichert ist.

2. Der Phillips-Katalysator nach Anspruch 1, dadurch gekennzeichnet, daß das Aluminiumoxid an der Oberfläche der Poren der Trägergelteilchen angereichert ist.

3. Der Phillips-Katalysator nach Anspruch 1 oder 2, dadurch gekennzeichnet, daß das Porenvolumen der Trägergelteilchen bei 0,8 bis 1,5 ml/g liegt.

4. Der Phillips-Katalysator nach einem der Ansprüche 1 bis 3, dadurch gekennzeichnet, daß die spezifische Oberfläche der Trägergelteilchen bei 200 bis 700 m²/g liegt.

5. Der Phillips-Katalysator nach einem der Ansprüche 1 bis 4, dadurch gekennzeichnet, daß die Teilchengröße der Trägergelteilchen bei 1 bis 300 µm liegt.

6. Der Phillips-Katalysator nach einem der Ansprüche 1 bis 5, dadurch gekennzeichnet, daß man als Fluorid Ammoniumfluorid, Ammoniumbifluorid, Ammoniumtetrafluorborat, Bortrifluorid, Ammoniumhexafluorphosphat und Ammoniumhexafluorsilikat verwendet.

7. Verfahren zur Herstellung von Ethylenhomopolymerisaten und -copolymerisaten mit α-Olefinen durch Polymerisation von Ethylen oder von Gemischen aus Ethylen und α-Olefinen mit Hilfe von Phillips-Katalysatoren, dadurch gekennzeichnet, daß man hierbei die Phillips-Katalysatoren gemäß einem der Ansprüche 1 bis 6 verwendet.

8. Das Verfahren nach Anspruch 7, dadurch gekennzeichnet, daß man metallorganische Verbindungen als Cokatalysatoren verwendet.

9. Das Verfahren nach Anspruch 7 oder 8, dadurch gekennzeichnet, daß man in der Gegenwart von Wasserstoff (co)polymerisiert.

## Claims

1. A Phillips catalyst for the homopolymerization of ethylene and the copolymerization of ethylene with α-olefins, containing, as a catalytically active component, a chromium catalyst which has a chromium content of from 0.1 to 10% by weight and is supported on a finely divided aluminum silicate gel, modified with at least one fluoride and activated in an oxidizing atmosphere at from 400 to 1100°C, wherein the aluminum silicate gel (carrier gel) has an alumina content of from 0.5 to 6% by weight, the alumina being concentrated in the surface region of the carrier gel particles.

2. A Phillips catalyst as claimed in claim 1, wherein the alumina is concentrated at the surface of the pores of the carrier gel particles.

3. A Phillips catalyst as claimed in claim 1 or 2, wherein the pore volume of the carrier gel particles is from 0.8 to 1.5 ml/g.

4. A Phillips catalyst as claimed in any of claims 1 to 3, wherein the specific surface area of the carrier gel particles is from 200 to 700 m²/g.

5. A Phillips catalyst as claimed in any of claims 1 to 4, wherein the particle size of the carrier gel particles is from 1 to 300 µm.

6. A Phillips catalyst as claimed in any of claims 1 to 5, wherein the fluoride used is ammonium fluoride, ammonium difluoride, ammonium tetrafluoborate, boron trifluoride, ammonium hexafluorophosphate or ammonium hexafluorosilicate.

7. A process for the preparation of an ethylene homopolymer or ethylene copolymer with α-olefins by polymerisation of ethylene or of a mixture of ethylene and α-olefins with the aid of a Phillips catalyst, wherein a Phillips catalyst as claimed in any of claims 1 to 6 is used.

8. A process as claimed in claim 7, wherein an organometallic compound is used as a cocatalyst.

9. A process as claimed in claim 7 or 8, wherein (co)polymerization is carried out in the presence of hydrogen.

## Revendications

1. Catalyseur de Phillips pour l'homopolymérisation d'éthylène et la copolymérisation d'éthylène avec des α-oléfines, contenant comme composant à activité catalytique un catalyseur au chrome déposé sur un gel de silicate d'aluminium en fines particules, modifié avec au moins un fluorure et activé dans une atmosphère oxydante entre 400 et 1100°C avec une teneur en chrome de 0,1 à 10 % en poids, caractérisé par le fait que le gel de silicate d'aluminium (gel de support) présente une teneur en oxyde d'aluminium de 0,5 à 6 % en poids, tandis que l'oxyde d'aluminium est enrichi dans la zone superficielle des particules de support.

2. Catalyseur de Phillips selon la revendication 1, caractérisé par le fait que l'oxyde d'aluminium est enrichi à la surface des pores des particules de support.

3. Catalyseur de Phillips selon l'une des revendications 1 et 2, caractérisé par le fait que le volume des pores des particules de support est de 0,8 à 1,5 ml/g.

4. Catalyseur de Phillips selon l'une quelconque des revendications 1 à 3, caractérisé par le fait que la surface spécifique des particules de support est de 200 à 700 m²/g.

5. Catalyseur de Phillips selon l'une quelconque des revendications 1 à 4, caracLérisé par le fait que la taille des particules de support est de 1 à 300 µm.

6. Catalyseur de Phillips selon l'une quelconque des revendications 1 à 5, caractérisé par le fait qu'on utilise, comme fluorure, du fluorure d'ammonium, du bifluorure d'ammonium, du tétrafluoroborate d'ammonium, du trifluorure de bore, de l'hexafluorophosphate d'ammonium et de l'hexafluorosilicate d'ammonium.

7. Procédé pour la préparation d'homopolymères d'éthylène et de copolymères d'éthylène avec des α-oléfines par polymérisation d'éthylène ou de mélanges d'éthylène et d'α-oléfines au moyen de catalyseurs de Phillips, caractérisé par le fait qu'on utilise pour ce faire les catalyseurs de Phillips selon l'unc quelconque des revendications 1 à 6.

8. Procédé selon la revendication 7, caractérisé par le fait qu'on utilise des composés organo-métalliques comme catalyseurs.

9. Procédé selon l'une des revendications 7 et 8, caractérisé par le fait qu'on (co)polymérise en présence d'hydrogène.
